(19) Europäisches Patentamt
European Patent Office
Office européen des brevets

(11) **EP 2 836 464 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(21) Anmeldenummer: **13715234.4**

(22) Anmeldetag: **11.04.2013**

(51) Int Cl.:
*C02F 1/42* (2006.01)   *B01J 49/00* (2006.01)
*C02F 5/00* (2006.01)

(86) Internationale Anmeldenummer:
**PCT/EP2013/057558**

(87) Internationale Veröffentlichungsnummer:
**WO 2013/153148 (17.10.2013 Gazette 2013/42)**

(54) **VERFAHREN ZUM BETRIEB EINER WASSERBEHANDLUNGSANLAGE**

METHOD FOR OPERATING A WATER SOFTENER

ROCÉDÉ PERMETTANT DE FAIRE FONCTIONNER UNE INSTALLATION D'ADOUCISSEMENT D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2012   DE 102012007566**

(43) Veröffentlichungstag der Anmeldung:
**18.02.2015   Patentblatt 2015/08**

(73) Patentinhaber: **Judo Wasseraufbereitung GmbH 71364 Winnenden (DE)**

(72) Erfinder:
• **SÖCKNICK, Ralf**
  **70806 Kornwestheim (DE)**
• **KÜHN, Walter**
  **71686 Backnang (DE)**
• **HAUG, Alexander**
  **71686 Remseck (DE)**

(74) Vertreter: **Kohler Schmid Möbus Patentanwälte Partnerschaftsgesellschaft mbB Ruppmannstraße 27 70565 Stuttgart (DE)**

(56) Entgegenhaltungen:
**EP-A2- 0 447 350     WO-A1-94/13379**
**US-A- 5 069 779     US-A- 6 036 866**

## Beschreibung

Die Erfindung betrifft ein Verfahren zum Betrieb einer Wasserbehandlungsanlage mit einem ersten Behälter und mindestens einem weiteren Behälter, wobei die Behälter parallel von je einem Teilvolumenstrom und zusammen von einem Gesamtvolumenstrom durchflossen werden und jeweils mit einem regenerierbaren Wasserbehandlungselement einer Grundkapazität bestückt sind.

Ein Verfahren, bei dem mehrere Behälter parallel betrieben werden, ist aus EP 1 160 204 B1 bekannt.

Wasser, welches durch das öffentliche Trinkwassernetz zur Verfügung gestellt wird, enthält verschiedenen Härtebildnern, insbesondere Calcium-Ionen und Magnesium-Ionen. Dies kann zu Kalkablagerungen an allen Arten von Oberflächen führen, die dem Wasser ausgesetzt sind.

Mittels Wasserenthärtungsanlagen kann das Wasser enthärtet werden, indem Calcium- und Magnesium-Ionen durch Natrium-Ionen ersetzt werden. Hierfür wird ein mit Natrium-Ionen beladenes Ionentauscherharz verwendet. Das Ionentauscherharz kann jedoch nur eine bestimmte Menge an Calcium- und Magnesium-Ionen aufnehmen. Ist diese Menge erreicht, so erfolgt kein Ionenaustausch mehr, weil die Kapazität des Ionentauscherharzes erschöpft ist. Das Ionentauscherharz muss regeneriert werden. Hierzu wird eine Regenerationslösung (Natriumchloridlösung) über das Ionentauscherharz geleitet. Dabei wird das Ionentauscherharz mit Natrium-Ionen beladen.

Der Grad der Erschöpfung des Ionentauscherharzes wird üblicherweise durch Messung der seit der letzten Regeneration durch einen mit Ionentauscherharz bestückten Behälter geflossenen und enthärteten Wassermenge unter Berücksichtigung der Rohwasserhärte ermittelt, wie in DE 32 33 238 C2 oder in DE 103 50 884 B4 beschrieben.

In DE 32 33 238 C2 wird ein mittlerer täglicher Wasserverbrauch der zurückliegenden Zeit ermittelt, aus dem eine Reservekapazität berechnet wird. Die Regeneration wird eingeleitet, wenn die Restkapazität unter den Wert der Reservekapazität sinkt. Die Regeneration wird dann im Laufe des Tages zu einem Zeitpunkt durchgeführt, an dem der Wasserverbrauch voraussichtlich gering ist. Nachteilig daran ist, dass während der Regeneration keine Enthärtung des Wassers stattfindet.

Aus DE 103 50 884 B4 ist eine Wasseraufbereitungsanlage mit zwei Aufbereitungsbehältern, die wechselweise betrieben werden, bekannt. Jedem Aufbereitungsbehälter ist eine Steuereinheit zugeordnet. Die Rohwasserhärte und die durch den entsprechenden Aufbereitungsbehälter geflossene Wassermenge werden gemessen. Die Restkapazität des im Betrieb befindlichen Aufbereitungsbehälters wird nach Durchfluss einer bestimmten Wassermenge oder nach einer bestimmten Zeit aus der Rohwasserhärte und der gemessenen Wassermenge bestimmt.

EP 2 048 117 A1 beschreibt ebenfalls eine Wasseraufbereitungsanlage, die im Pendelbetrieb betrieben wird, wobei die Restkapazität des in Betrieb befindlichen Behälters über einen Leitfähigkeitssensor bestimmt wird. Die Durchflüsse durch die einzelnen Behälter werden separat bestimmt.

Bei den im Pendelbetrieb betriebenen Vorrichtungen wird stets einer der Aufbereitungsbehälter nicht mit Wasser durchflossen, was aus hygienischen Gründen nicht wünschenswert ist und daher vermieden werden soll.

Aus EP 1 160 204 B1 ist ein Verfahren bekannt, bei dem mehrere Behälter parallel betrieben werden. Bei derartigen Parallelverfahren wird in der Regel ein Gesamtdurchfluss durch alle Behälter bestimmt und angenommen, dass der Gesamtdurchfluss sich gleichmäßig auf die einzelnen Behälter verteilt. Es ist jedoch auch bekannt, die Durchflüsse durch die einzelnen Behälter separat zu bestimmen. Problematisch bei den aus dem Stand der Technik bekannten Parallelverfahren ist, dass bei zu später Regeneration die Gefahr eines Härtedurchbruchs besteht oder bei frühzeitiger Regeneration der Verbrauch an Regenerationslösung unnötig hoch ist.

US 5 069 779 A) offenbart eine Wasserbehandlungsvorrichtung die im Parallelbetrieb betrieben wird. Zur Regeneration wird ein Grenzwert bestimmt und mit der aktuellen Kapazität des jeweiligen Wasserbehandlungselements verglichen. Der Grenzwert wird berechnet aus der Maximalkapazität Vmax der maximal möglichen Durchflussrate Fmax und der maximal möglichen Cmax sowie der Zeit T, die für eine Regeneration benötigt wird.

In WO 94/13379 A1 wird ein Wasserbehandlungsverfahren mit parallel betriebenen Wasserbehandlungselementen beschrieben, bei dem die Regeneration desjenigen Wasserbehandlungselements mit der kleineren Restkapazität gestartet wird, wenn dessen Restkapazität oder die Restkapazitäten beider Wasserbehandlungselemente oder die Summe der Restkapazitäten aller Wasserbehandlungselemente einen zuvor festgesetzten Grenzwert unterschreiten.

US 6 036 866 A beschreibt ebenfalls eine Parallelanlage zum Behandeln von Wasser. Die Regeneration eines der N Wasserbehandlungselemente wird eingeleitet, wenn k von N verwendeten Wasserbehandlungselementen einen Grenzwert unterschritten haben, wobei der Grenzwert unterschiedlich ist je nachdem, wie viele Wasserbehandlungselemente den Grenzwert unterschreiten. Für ein System mit N Behälter wird die Regeneration eines Behälters eingeleitet, wenn das Verhältnis von Restkapazität und Gesamtkapazität von k Behältern kleiner ist als (k-1)/N. Ist diese Bedingung erfüllt, wird der Behälter mit der kleinsten Restkapazität regeneriert.

EP 0 447 350 A2 offenbart ein Verfahren zum Betrieb einer Wasserbehandlungsanlage, bei der N Behälter mit Wasserbehandlungselementen parallel betrieben werden. Sobald 1/N der kleinsten Kapazität der Behälter aufgebraucht ist, wird einer der Behälter regeneriert, während die anderen weiter betrieben werden. Der in EP 0 447 350 A2 offenbarte (sehr hoch angesetzte) Grenzwert führt jedoch zu unnötig häufigen Regenerationen und somit zu hohen Spülwassermengen und zu einem starken Verschleiß an Ventilen und Dichtungen.

Die oben beschriebenen Probleme treten in ähnlicher Weise auch bei anderen Wasserbehandlungsanlagen, wie z.B. Filteranlagen, auf.

Im Rahmen dieser Anmeldung soll unter "Kapazität eines Behälters" die Kapazität des in diesem Behälter befindlichen Wasserbehandlungselements (z.B. Ionentauscherharz, Filtermaterial) verstanden werden. Analog hierzu ist unter "Erschöpfung eines Behälters" die Erschöpfung des Wasserbehandlungselements im entsprechenden Behälter zu verstehen.

Aufgabe der Erfindung

Es ist daher Aufgabe der vorliegenden Erfindung, ein Verfahren vorzuschlagen, mit dem der Regenerationszeitpunkt einer Wasserbehandlungsanlage optimiert und somit sowohl ein Ausfall der gewünschten Behandlungsfunktion (bspw. in Form eines Härtedurchbruchs bei einer Wasserenthärtungsanlage) vermieden als auch die benötigte Menge an Regenerationslösung minimiert werden kann.

Kurze Beschreibung der Erfindung

Diese Aufgabe wird erfindungsgemäß durch ein Verfahren gemäß Anspruch 1 gelöst.

Das erfindungsgemäße Verfahren umfasst folgende, sich wiederholende Schritte:

- Bestimmung einer Restkapazität des Wasserbehandlungselements im ersten Behälter und Bestimmung des aktuellen Teilvolumenstroms durch den ersten Behälter,
- Bestimmung einer weiteren Restkapazität des Wasserbehandlungselements in mindestens einem der weiteren Behälter und/oder Bestimmung des aktuellen Teilvolumenstroms durch mindestens einen der weiteren Behälter,
- Bestimmung eines Regenerationsgrenzwertes für den ersten Behälter; wobei ein Regeneriervorgang des Wasserbehandlungselements im ersten Behälter eingeleitet wird, wenn die Restkapazität des Wasserbehandlungselements im ersten Behälter den Regenerationsgrenzwert unterschreitet.

Erfindungsgemäß wird beim vorgeschlagenen Verfahren der Regenerationsgrenzwert in Abhängigkeit von den aktuellen Teilvolumenströmen durch den ersten und den weiteren Behälter, und/oder von der weiteren Restkapazität des Wasserbehandlungselements des weiteren Behälters berechnet. Die Funktion des Regenerationsgrenzwertes fällt monoton in Abhängigkeit von den aktuellen Teilvolumenströmen und / oder fällt monoton in Abhängigkeit von der Restkapazität der Wasserbehandlungselemente der weiteren Behälter.

Im Gegensatz zu einigen aus dem Stand der Technik bekannten Verfahren, bei denen als Kriterium für die Regeneration eines Behälters ausschließlich der Zustand (Restkapazität, Teilvolumenstrom) des zu regenerierenden Behälters herangezogen wird, sieht die vorliegende Erfindung vor, auch die Restkapazität eines Wasserbehandlungselements mindestens eines weiteren Behälters und/oder den Volumenstrom durch diesen weiteren Behälter mit einzubeziehen.

Vorzugsweise wird beides, also sowohl die Restkapazitäten als auch die Volumenströme der weiteren Behälter, in die Berechnung des Regenerationsgrenzwertes mit einbezogen. Eine Verbesserung ergibt sich jedoch auch schon bei Berücksichtigung lediglich der Restkapazitäten oder lediglich der Volumenströme.

Der "erste Behälter" ist jeweils der Behälter, für den der Regenerationsgrenzwert bestimmt werden soll. Der Begriff "erster Behälter" bezieht sich also nicht immer auf denselben Behälter der Wasserbehandlungsanlage, sondern jeweils auf den als nächstes zu regenerierenden Behälter.

Der Zustand der weiteren Behälter wird bei der Festlegung des Regenerationsgrenzwertes berücksichtigt, indem der Regenerationsgrenzwert so gewählt wird, dass die Regeneration des ersten Behälters beendet ist, bevor die Kapazität der sich in Betrieb befindlichen Behälter erschöpft ist. Dabei darf die Regeneration jedoch auch nicht zu früh gestartet werden, weil sonst der Verbrauch an Regeneriermittellösung steigt. D.h. bei einer Wasserenthärtungsanlage soll zu Beginn der Regeneration die Restkapazität der weiteren Behälter (zusammen) optimalerweise gerade so groß sein, dass der maximale Gesamtvolumenstrom (oder der erwartete Gesamtvolumenstrom) durch die weiteren Behälter während der Dauer der Regeneration des ersten Behälters enthärtet wird, wobei der Gesamtvolumenstrom gleich der Summer aller Teilvolumenströme durch die Behälter ist. Der erwartete Gesamtvolumenstrom kann mittels der Messung der aktuellen Teilvolumenströme des ersten und weiteren Behälters festgelegt werden, z.B. indem angenommen wird: erwarteter Gesamtvolumenstrom = Summe der aktuellen Teilvolumenströme durch ersten und weiteren Behälter (wenn in naher Zukunft keine Änderungen erwartet werden) oder z.B. indem angenommen wird: erwarteter Volumenstrom = Mittelwert der Summe der über einen gewissen Zeitraum gemessenen aktuellen Teilvolumenströme durch den ersten und den weiteren Behälter.

Falls sich zur Zeit der Bestimmung des Regenerationsgrenzwertes weitere Behälter bereits in Regeneration befinden, werden deren Zustände vorzugsweise mit berücksichtigt. Dabei muss beachtet werden, zu welchem Zeitpunkt die Regeneration der weiteren Behälter beendet ist, wann also die Grundkapazität der weiteren Behälter wieder zur Verfügung steht.

Der konkrete Wert des Regenerationsgrenzwertes ist, neben den Zuständen der weiteren Behälter, auch von anlagenspezifischen Parametern (maximal zulässiger Volumenstrom, Dauer der Regeneration) abhängig.

Ein Behälter kann mehrere Wasserbehandlungselemente beinhalten, z.B. in Form von mehreren Ionentauscherharzen. So können z.B. ein Kationen- und ein Anionentauscherharz innerhalb eines einzigen Behälters vorgesehen sein (Mischbettfilter). Darüber hinaus besteht auch die Möglichkeit, dass in einem Behälter mehrere Filterelemente oder Ionentauscher und Filterelemente integriert sind. In diesem Fall werden bei der Bestimmung des Regenerationsgrenzwertes in Abhängigkeit von den Restkapazitäten der Wasserbehandlungselemente vorzugsweise die Restkapazitäten aller in den entsprechenden Behältern befindlichen Wasserbehandlungselemente berücksichtigt. Dies ist empfehlenswert, falls die verschiedenen Wasserbehandlungselemente desselben Behälters zu verschiedenen Zeitpunkten regeneriert werden müssen, da während der Dauer der Regeneration des einen Wasserbehandlungselements die Restkapazität des anderen Wasserbehandlungselements desselben Behälters nicht zur Verfügung steht. Ob bei einer Wasserenthärtungsanlage ein Härtedurchbruch während der Regenerationsdauer des ersten Behälters verhindert werden kann, hängt von der während der Regeneration zur Verfügung stehenden Restkapazität und von der Kapazität, die während der Regenerationsdauer zur Behandlung der Teilvolumenströme benötigt wird, und damit von der Regenerationsdauer, der Teilvolumenströme und der Wasserqualität, ab.

Zur Steuerung des Regeneriervorgangs umfasst die Wasserbehandlungsanlage eine elektronische Steuereinheit. Während des Regeneriervorgangs wird Regeneriermittellösung durch das Wasserbehandlungselement geleitet. Für die Bereitstellung der Regeneriermittellösung kann ein Vorratsgefäß vorgesehen sein. Durch die erfindungsgemäße Berücksichtigung der Zustände der weiteren Behälter kann eine zentrale Steuerung für alle berücksichtigten Behälter verwendet werden. Die Steuerung ist vorzugsweise ständig informiert über den Zustand (momentane Restkapazität und/oder momentaner Volumenstrom) aller Behälter. Eine einzige zentrale Steuerung ist kostengünstig und platzsparend im Vergleich zu mehreren dezentralen Steuereinheiten.

Die Grundkapazitäten der Wasserbehandlungselemente in den einzelnen Behältern sind bekannt und werden in der elektronischen Steuereinheit abgespeichert.

Die Teilvolumenströme durch die Behälter werden vorzugsweise kontinuierlich oder in kurzen Abständen wiederholt bestimmt, insbesondere mittels eines Durchflussmessers gemessen. Eine Neuberechnung des Regenerationsgrenzwerts erfolgt vorzugsweise entweder in festgelegten Zeitabständen oder wenn ein zuvor festgelegter Grenzwert für die Änderung des Volumenstroms innerhalb eines vorgegebenen Zeitintervalls überschritten wird (Mindeständerung des Volumenstroms).

Die Funktion des Regenerationsgrenzwertes fällt in Abhängigkeit von den aktuellen Teilvolumenströmen monoton, vorzugsweise streng monoton. Bei der Funktion kann es sich um einen stetigen, insbesondere um einen zumindest abschnittsweise linearen Zusammenhang handeln. Es ist jedoch auch eine unstetige Funktion denkbar. Erfindungsgemäß sinkt also der Regenerationsgrenzwert, wenn der Volumenstrom durch die Behälter ansteigt, d.h. je größer die Wasserentnahme ist, desto kleiner ist der Regenerationsgrenzwert. Wenn der momentane Wasserverbrauch hoch ist, bleibt der erste Behälter erfindungsgemäß solange in Betriebsstellung bis seine Restkapazität (nahezu) vollständig ausge-schöpft ist. In diesem Fall werden sämtliche Behälter - auch solche mit nur noch geringer Restkapazität - benötigt, um z.B. einen Härtedurchbruch zu verhindern.

Alternativ oder zusätzlich fällt die Funktion des Regenerationsgrenzwertes in Abhängigkeit von der Restkapazität der Wasserbehandlungselemente der weiteren Behälter monoton, vorzugsweise streng monoton. Auch hier kann es sich um eine stetige, insbesondere um eine zumindest abschnittsweise lineare Funktion handeln. Es ist jedoch auch eine unstetige Funktion denkbar. Erfindungsgemäß sinkt also der Regenerationsgrenzwert mit steigender Restkapazität der weiteren Behälter, d.h. dass der Regenerationsgrenzwert kleiner gewählt wird je größer die Restkapazität der weiteren Behälter ist. Bei ausreichend vorhandener Restkapazität der weiteren Behälter wird erfindungsgemäß die Kapazität des ersten Behälters mehr erschöpft als bei knapp bemessener Restkapazität der weiteren Behälter, d.h. der Beginn einer Regeneration verzögert sich, wenn genügend Reserven in den weiteren Behältern vorhanden sind, so dass auch zu einem späteren Regenerationszeitpunkt ein Härtedurchbruch während der Regeneration vermieden werden kann. Die Kapazität des ersten Behälters kann somit optimal ausgenutzt werden, ohne einen Härtedurchbruch zu riskieren.

Vorzugsweise ist mehr als ein weiterer Behälter vorgesehen und bei der Festlegung des Regenerationsgrenzwertes werden die aktuellen Teilvolumenströme und/oder die Restkapazitäten aller weiteren Behälter berücksichtigt. Durch die Berücksichtigung der Teilvolumenströme und/oder der Restkapazitäten aller Behälter kann der Regenerationsgrenzwert bzgl. der Auslastung der Wasserbehandlungselemente und der benötigten Regeneriermittellösung, die während des Regeneriervorgangs eingesetzt wird, optimiert werden.

Besonders vorteilhaft ist es, wenn die Menge der eingesetzten Regeneriermittellösung in Abhängigkeit vom Regenerationsgrenzwert gewählt wird, derart, dass umso mehr Regeneriermittellösung eingesetzt wird, je kleiner der Regenerationsgrenzwert ist. Die noch vorhandene Restkapazität eines Behälters schwankt je nach Regenerationsgrenzwert, bei dem der Regeneriervorgang ausgelöst wird. Bei frühzeitiger Regeneration (großer Regenerationsgrenzwert) wird entsprechend weniger Regeneriermittellösung benötigt als bei einer späteren Regeneration (kleiner Regenerationsgrenzwert). Die Menge an Regeneriermittellösung kann beispielsweise über eine Pumpe (z.B. eine Solepumpe für die Regeneration eines Ionentauscherharzes) gesteuert werden. Vorzugsweise wird so viel Regeneriermittellösung zugeführt, dass das Ionentauscherharz gerade seinen Sollregenerationsgrad erreicht hat. Auf diese Weise wird der Verbrauch an Regeneriermittellösung verringert.

Bei einer besonders bevorzugten Variante ist die Wasserbehandlungsanlage eine Wasserenthärtungsanlage zum Enthärten von Wasser mit einer Rohwasserhärte und die Behälter enthalten ein Ionentauscherharz als Wasserbehandlungselement. Als Regeneriermittellösung kommt dann eine konzentrierte Salzsole zur Anwendung, mit der das Ionentauscherharz beaufschlagt wird, wodurch die gebundenen Härtebildner verdrängt und durch Natrium-Ionen ersetzt werden. Nach der Regeneration steht wieder die volle Kapazität (Grundkapazität) bzw. die dem Sollregenerationsgrad entsprechenden Kapazität des Ionentauschers zur Verfügung.

Alternativ oder zusätzlich können Filter als Wasserbehandlungselemente vorgesehen sein. Die Regeneration erfolgt dann bspw. durch Rückspülen des entsprechenden Filters mit einer Rückspüllösung (Regeneriermittellösung).

Die Restkapazitäten des Ionentauscherharzes der Behälter werden vorzugsweise aus der seit der letzten Regeneration durch den entsprechenden Behälter geflossenen Wassermenge und aus der Rohwasserhärte bestimmt. Die hierfür benötigte, seit der letzten Regeneration durch den Behälter geflossene Wassermenge kann mittels eines Durchflussmessers bestimmt werden. Die Bestimmung der Rohwasserhärte des zu enthärteten Wassers kann kontinuierlich mittels eines integrierten Leitfähigkeitssensors erfolgen, titrimetrisch bestimmt oder beim Wasserversorger erfragt und in der Steuereinheit hinterlegt werden.

Bei einer anderen Variante kann die Restkapazität durch Messung der Leitfähigkeitsdifferenz des Ionentauschermaterials ermittelt werden.

Die für die Ermittlung der Restkapazitäten erforderlichen Messungen können automatisch erfolgen und wiederholen sich, insbesondere erfolgen sie kontinuierlich.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Es zeigen:

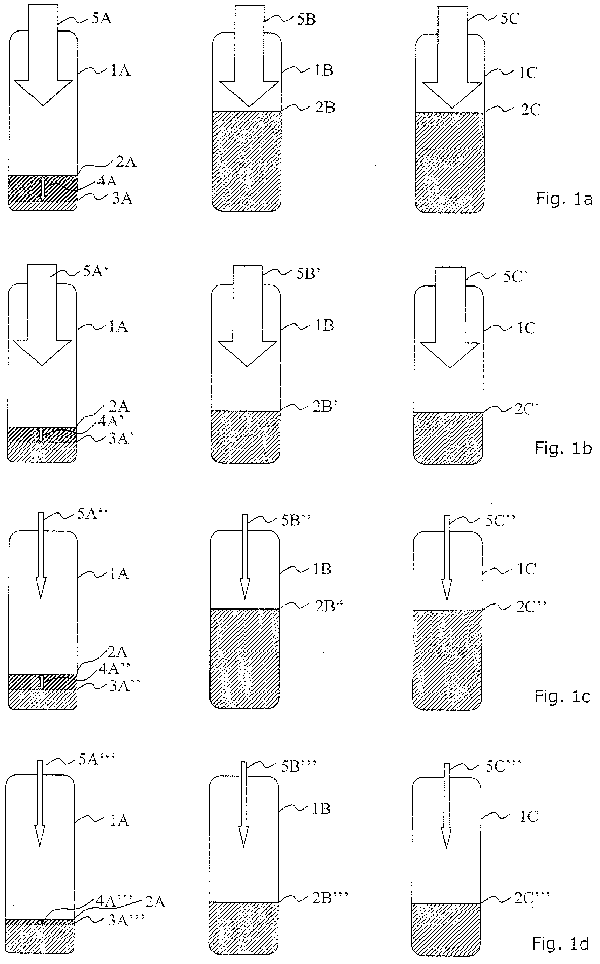

Fig. 1a - 1d     am Beispiel von drei Behältern schematisch die Abhängigkeit des Regenerationsgrenzwertes des ersten Behälters für verschiedene Zustände der weiteren Behälter:

a) hoher Volumenstrom durch die weiteren Behälter und hohe Restkapazität der Wasserbehandlungselemente der weiteren Behälter;

b) hoher Volumenstrom durch die weiteren Behälter und geringe Restkapazität der Wasserbehandlungselemente der weiteren Behälter;

c) geringer Volumenstrom durch die weiteren Behälter und hohe Restkapazität der Wasserbehandlungselemente der weiteren Behälter;

d) geringer Volumenstrom durch die weiteren Behälter und geringe Restkapazität der Wasserbehandlungselemente der weiteren Behälter;

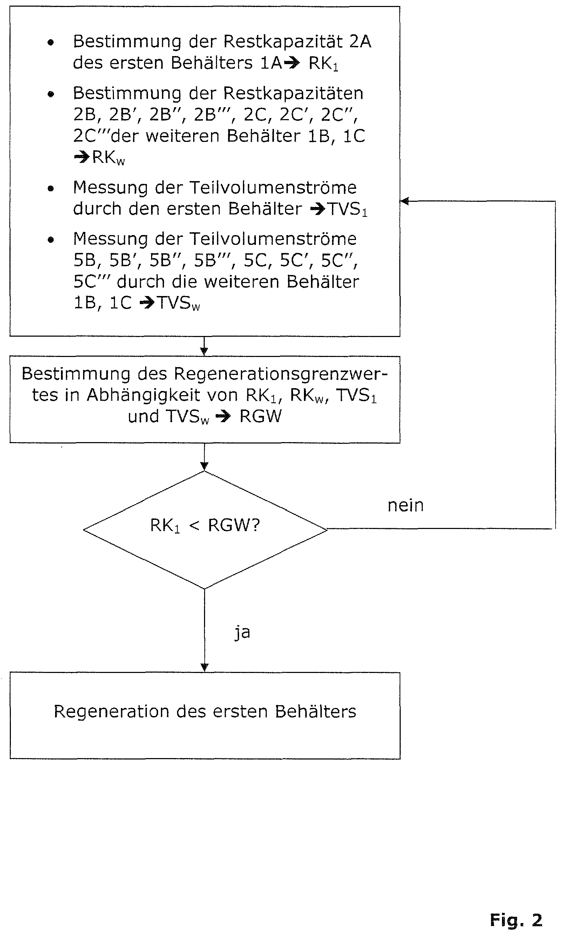

Fig. 2     ein Ablaufdiagramm des erfindungsgemäßen Verfahrens.

Die Figuren zeigen drei parallel betriebene Behälter **1A, 1B, 1C** (Zu-und Abieitung der Behälter sind nicht gezeigt), die gleichzeitig mit Teilvolumenströmen **5A, 5A', 5A**", **5A'''**, **5B, 5B', 5B"**, **5B'''**, **5C**, **5C'**, **5C"**, **5C'''** von zu behandelndem Wasser durchflossen werden.

Die Behälter **1A, 1B, 1C** weisen eine aktuelle Restkapazitäten **2A, 2B, 2B', 2B"**, **2B'''**, **2C, 2C', 2C"**, **2C'''** auf. Der aktuelle Zustand der weiteren Behälter 1B, 1C ist durch den aktuellen Teilvolumenstrom 5B, 5B', 5B", 5B''', 5C, 5C', 5C", 5C''' und die aktuelle Restkapazität 2B, 2B', 2B", 2B''', 2C, 2C', 2C", 2C''' charakterisiert.

Die aktuelle Restkapazität 2A des ersten Behälters 1A ist in jedem der in Fig. 1 gezeigten Beispielen der Einfachheit halber gleich groß gewählt. Darüber hinaus wird davon ausgegangen, dass die Behälter 1A, 1B, 1C innerhalb der einzelnen Beispiele mit gleich großen Teilvolumenströmen 5A, 5A', 5A", 5A''', 5B, 5B', 5B", 5B''', 5C, 5C', 5C", 5C'''

durchflossen werden. Das erfindungsgemäße Verfahren kann jedoch auch für unterschiedliche Teilvolumenströme angewendet werden.

In Abhängigkeit vom Zustand der weiteren Behälter 1B, 1C wird ein Regenerationsgrenzwert **3A, 3A', 3A", 3A'"** für den ersten Behälter 1A bestimmt (Regenerationsgrenzwert = Wert der Restkapazität des ersten Behälters 1A, bei dessen Unterschreitung die Regeneration gestartet werden soll). Die Differenz zwischen der aktuellen Restkapazität 2A des ersten Behälters 1A und dem Regenerationsgrenzwert **3A, 3A', 3A", 3A'"** ergibt die bis zur Regenerierung des ersten Behälters 1A noch verfügbare Kapazität **4A, 4A', 4A", 4A'"** des ersten Behälters 1A.

Die aktuellen Teilvolumenströme 5B, 5B', 5B", 5B'", 5C, 5C', 5C", 5C'" durch die weiteren Behälter 1B, 1C werden für jeden weiteren Behälter 1B, 1C separat (vorzugsweise kontinuierlich) gemessen. Dasselbe gilt für den Teilvolumenstrom 5A, 5A', 5A", 5A'" durch den ersten Behälter 1A. Für die Bestimmung des Regenerationsgrenzwerts sind die Teilvolumenströme durch alle betrachteten Behälter 1A, 1B, 1C relevant.

Im Falle einer Wasserenthärtungsanlage können die Restkapazitäten der weiteren Behälter 1B, 1C mittels der Rohwasserhärte und der Wassermenge, die seit der letzten Regeneration des Behälters 1B, 1C durch den jeweiligen Behälter 1B, 1C geflossen ist bestimmt werden. Dazu ist für jeden Behälter ein eigener Wasserzähler vorgesehen. Im Falle einer Filteranlage können die Restkapazitäten durch Differenzdruckmessungen oder aufgrund der durch den Filter geflossenen Wassermenge bestimmt werden.

Bei dem in **Fig. 1a** gezeigten Beispiel sind die Teilvolumenströme 5B, 5C durch die Behälter 1B, 1C der Wasserbehandlungsanlage hoch; es wird also viel Weichwasser entnommen. Als "hohe Teilvolumenströme" können bei einer Wasserbehandlungsanlage mit drei Behältern Teilvolumenströme bezeichnet werden, die beispielsweise größer als 1/6 des maximal möglichen Gesamtvolumenstroms sind. Um die hohe Weichwasserentnahme zu bewältigen, sollte zunächst auch der erste Behälter 1A in Betriebsstellung bleiben und dessen Regenerationszeitpunkt gegebenenfalls zu einem späteren Zeitpunkt gestartet werden, wenn die Weichwasserentnahme geringer ist. Die weiteren Behälter 1B, 1C weisen in dem in Fig. 1a gezeigten Beispiel eine relativ hohe Restkapazität 2B, 2C (bspw. größer als 30 % der Grundkapazitäten) auf. Sie können daher noch lange in Betriebsstellung bleiben und auch während einer späteren Regeneration des ersten Behälters 1A Weichwasser liefern. Die hohen aktuellen Volumenströme 5B, 5C in Kombination mit der hohen Restkapazität 2B, 2C der weiteren Behälter 1B, 1C führt dazu, dass der Regenerationsgrenzwert 3A des ersten Behälters 1A erfindungsgemäß sehr niedrig gewählt wird, d.h. die Regeneration des ersten Behälters 1A wird relativ spät (bei einer niedrigen Restkapazität 2A des ersten Behälters 1A) gestartet. Die noch verfügbare Kapazität 4A bis zum Beginn der Regeneration ist in Fig. 1a daher entsprechend hoch.

Die gegenteilige Situation ist in **Fig. 1d** dargestellt: Die Volumenströme 5B'", 5C" durch die weiteren Behälter 1B 1C sind gering. Die weiteren Behälter 1B, 1C weisen niedrige Restkapazitäten 2B'", 2C" auf. Beides sind Argumente für einen frühen Regenerationsbeginn des ersten Behälters 1A. Der Regenerationsgrenzwert 3A'" des ersten Behälters 1A ist daher größer als der entsprechende Wert 3A in Figur 1a. Die noch verfügbare Restkapazität 4A'" ist somit entsprechend niedrig.

**Fig. 1b** zeigt eine Situation, bei der die Volumenströme 5B', 5C' durch die weiteren Behälter 1B, 1C hoch sind; jedoch weisen die Behälter 1B, 1C nun niedrige Restkapazitäten 2B', 2C' auf. Die hohen Volumenströme 5B', 5C' sprechen für einen späteren Regenerationsbeginn vom ersten Behälter 1A. Da die Restkapazitäten 2B', 2C' der weiteren Behälter 1B, 1C jedoch nur noch begrenzt sind, sollte die Regeneration vom ersten Behälter 1A andererseits nicht zu spät beginnen, damit diese vor Erschöpfung der weiteren Behälter 1B, 1C abgeschlossen werden kann. Der daraus resultierende Regenerationsgrenzwert der Restkapazität 3A' des ersten Behälters 1A ist folglich einerseits größer als der analoge Wert 3A in Fig. 1a, aufgrund der größeren Teilvolumenströme jedoch kleiner als der analoge Wert 3A'" in Fig. 1d. Die noch verfügbare Kapazität 4A' bis zum Beginn der Regeneration des ersten Behälters 1A ist daher entsprechend geringer als der analoge Wert 4A und höher als der analoge Werft 49".

Bei dem in **Fig. 1c** gezeigten Beispiel sind die Volumenströme 5B", 5C" durch die weitern Behälter 1B, 1C gering. Darüber hinaus weisen die weiteren Behälter 1B, 1C hohe Restkapazitäten 2B", 2C" auf. Die geringen Volumenströme 5B", 5C" legen einen früheren Regenerationsbeginn des ersten Behälters 1A nahe, weil momentan wenig Weichwasser entnommen wird und so ein Behälter zur Regeneration vom Netz genommen werden könnte. Die hohen Restkapazitäten 2B", 2C" der weiteren Behälter 1B, 1C erlauben andererseits, den ersten Behälter 1A später zu regenerieren, weil auch dann die Behälter 1B, 1C noch genügend Kapazitätsreserven aufweisen, um die während der Regeneration des ersten Behälters 1A benötigten Weichwassermengen zu produzieren. Erfindungsgemäß ergibt sich ein Regenerationsgrenzwert 3A" des ersten Behälters 1A, der vergleichbar ist mit dem entsprechenden Wert 3A' in Fig. 1b. Dementsprechend ist auch die noch verfügbare Restkapazität 4A" vergleichbar mit dem Wert 4A' aus Fig. 1b.

Wie in **Fig. 2** gezeigt, werden für die Bestimmung eines Regenerationsgrenzwertes **RGW** erfindungsgemäß zunächst die Restkapazitäten 2A, 2B, 2B', 2B", 2B'", 2C, 2C', 2C", 2C'"des ersten Behälters 1A und der weiteren Behälter 1B, 1C bestimmt und die Teilvolumenströme 5A, 5A', 5A", 5A'", 5B, 5B', 5B", 5B'", 5C, 5C', 5C", 5C'" durch alle Behälter 1A, 1B, 1C gemessen. Der erste Behälter 1A ist definitionsgemäß derjenige Behälter, der als nächstes regeneriert werden muss, und weist daher die kleinste Restkapazität 2A auf.

Der Summe der Teilvolumenströme (Gesamtvolumenstrom **GVS**), die Wasserqualität (Wasserhärte) und die Regenerationsdauer $t_{reg}$ des ersten Behälters 1A bestimmen den Wert der Summe der Restkapazitäten 2B, 2C der weiteren Behälter 1B, 1C, die bei Beginn der Regeneration mindestens vorhanden sein müssen, um einen Härtedurchbruch zu vermeiden (= Mindestrestkapazität **MRK** der weiteren Behälter). Die Mindestrestkapazität ist also eine Funktion der Regenerationsdauer, der Wasserqualität und des Gesamtvolumenstroms GVS. Je höher der Gesamtvolumenstrom GVS, desto höher ist die benötigte Mindestrestkapazität MRK. Um sicher zu gehen, dass auch bei Änderung des Gesamtvolumenstroms GVS kein Härtedurchbruch stattfindet, kann für die Berechnung der Mindestrestkapazität MRK anstatt des Gesamtvolumenstroms GVS durch die Behälter der maximal mögliche Dauervolumenstrom (Nenndurchfluss der Wasserbehandlungsanlage) verwendet werden.

Bei Kenntnis der Regenerationsdauer $t_{reg}$, der Summe der aktuellen Restkapazitäten $RK_w$ der weiteren Behälter 1B, 1C und des Gesamtvolumenstroms GVS kann berechnet werden, wann (bei gleichbleibenden Gesamtvolumenstrom GVS) die Mindestrestkapazität MRK der weiteren Behälter 1B, 1C erreicht ist und welche Restkapazität der erste Behälter zu diesem Zeitpunkt voraussichtlich haben wird. Diese prognostizierte Restkapazität für den ersten Behälter stellt den Regenerationsgrenzwert RGW dar.

Für den Fall gleicher Teilvolumenströme berechnet sich der Regenerationsgrenzwert für den ersten Behälter 1A demnach:

$$RGW = RK_1 - \Delta RK/n \qquad (\text{für } RK_1 > \Delta RK/n)$$

mit:

$RK_1$:  aktuelle Restkapazität des ersten Behälters

$RK_w$  Summe der aktuellen Restkapazitäten 2B, 2B', 2B", 2B''', 2C, 2C', 2C", 2C''' der weiteren Behälter 1B, 1C

n:  Anzahl der weiteren Behälter (hier: 2)

$\Delta RK$:  $RK_w$-MRK ($\Delta RK/n$ entspricht der bis zum Beginn der Regeneration noch verfügbare Kapazität 4A, 4A', 4A", 4 A''')

Wenn die aktuelle Restkapazität $RK_w$ der weiteren Behälter sehr groß ist und $RK_1 < \Delta RK/n$, dann kann der erste Behälter 1A vollständig erschöpft werden. Der Regenerationsgrenzwert ist dann Null oder nahezu Null.

Wenn die aktuelle Restkapazität $RK_w$ der weiteren Behälter 1B, 1C gegen die Mindestrestkapazität MRK tendiert, sollte der erste Behälter 1A sofort regeneriert werden. Der Regenerationsgrenzwert RGW ist in diesem Fall der Wert der aktuellen Restkapazität $RK_1$ des ersten Behälters 1A.

Wenn die Teilvolumenströme sehr hoch sind, ist auch der Wert der Mindestrestkapazität MRK entsprechend hoch.

**Bezugszeichenliste**

1A:  erster Behälter

1B:  zweiter Behälter

1C:  dritter Behälter

2A:  aktuelle Restkapazität des Wasserbehandlungselements des ersten Behälters

2B, 2B', 2B", 2B''':  aktuelle Restkapazität des Wasserbehandlungselements des zweiten Behälters

2C, 2C', 2C", 2C''':  aktuelle Restkapazität des Wasserbehandlungselements des dritten Behälters

3A, 3A', 3A", 3A''':  Regenerationsgrenzwert des ersten Behälters bei Beginn der Regeneration

4A, 4A', 4A", 4A''':  verfügbare Restkapazität des ersten Behälters bis zum Beginn der Regeneration

5A, 5A', 5A", 5A'''  Teilvolumenstrom im ersten Behälter,

5B, 5B', 5B", 5B''':  Teilvolumenstrom im zweiten Behälter

5C, 5C', 5C", 5C"':    Teilvolumenstrom im dritten Behälter

RGW:    Regenerationsgrenzwert (entspricht 3A, 3A', 3A", 3A"' in Fig. 1a-1d)

$RK_1$:    aktuelle Restkapazität des ersten Behälters (entspricht 2A in Fig. 1a-1d)

$RK_w$    Summe der aktuellen Restkapazitäten 2B, 2B', 2B", 2B"', 2C, 2C', 2C", 2C"' der weiteren Behälter 1B, 1C

MRK:    Mindestrestkapazität der weiteren Behälter (Summe der während der Regeneration des ersten Behälters 1A benötigten Kapazitäten der weitern Behälter 1B, 1C) MRK ~ $t_{reg}$*GVS*Härte

$t_{reg}$:    Regenerationsdauer

GVS    Gesamtvolumenstrom = Summe der Teilvolumenströme aller Behälter 1A, 1B, 1C

n:    Anzahl der weiteren Behälter (hier: 2)

$\Delta$RK:    $RK_w$-MRK ($\Delta$RK/n entspricht der bis zum Beginn der Regeneration noch verfügbaren Kapazität 4A, 4A', 4A", 4 A"')


**Patentansprüche**

1.    Verfahren zum Betrieb einer Wasserbehandlungsanlage mit einem ersten Behälter (1A) und mindestens einem weiteren Behälter (1B, 1C), wobei die Behälter (1A, 1B, 1C) parallel von je einem Teilvolumenstrom (5A, 5A', 5A", 5A"', 5B, 5B', 5B", 5B"', 5C, 5C', 5C", 5C"') und zusammen von einem Gesamtvolumenstrom (GVS) durchflossen werden und jeweils mit einem regenerierbaren Wasserbehandlungselement einer Grundkapazität bestückt sind, wobei das Verfahren folgende, sich wiederholende Schritte umfasst:

   • Bestimmung einer Restkapazität (2A) des Wasserbehandlungselements im ersten Behälter (1A) und Bestimmung des aktuellen Teilvolumenstroms (5A, 5A', 5A", 5A"') durch den ersten Behälter,
   • Bestimmung einer weiteren Restkapazität (2B, 2B', 2B", 2B"', 2C, 2C', 2C", 2C"') des Wasserbehandlungselements in mindestens einem der weiteren Behälter (1B, 1C) und/oder Bestimmung des aktuellen Teilvolumenstroms (5B, 5B', 5B", 5B"', 5C, 5C', 5C", 5C"') durch mindestens einen der weiteren Behälter (1B, 1C),
   • Bestimmung eines Regenerationsgrenzwertes (RGW) für den ersten Behälter;

   wobei ein Regeneriervorgang des Wasserbehandlungselements im ersten Behälter (1A) eingeleitet wird, wenn die Restkapazität (2A) des Wasserbehandlungselements im ersten Behälter (1A) den Regenerationsgrenzwert (RGW) unterschreitet,
   wobei der Regenerationsgrenzwert (RGW) in Abhängigkeit von den aktuellen Teilvolumenströmen (5A, 5A', 5A", 5A"', 5B, 5B', 5B", 5B"', 5C, 5C', 5C", 5C"') durch den ersten und den weiteren Behälter (1A, 1B, 1C), und/oder von der weiteren Restkapazität (2B, 2B', 2B", 2B"', 2C, 2C', 2C", 2C"') des Wasserbehandlungselements des weiteren Behälters (1B, 1C) berechnet wird,
   und wobei die Funktion des Regenerationsgrenzwertes (RGW) in Abhängigkeit von den aktuellen Teilvolumenströmen (5A, 5A', 5A", 5A"', 5B, 5B', 5B", 5B"', 5C, 5C', 5C", 5C"') monoton, vorzugsweise streng monoton, fällt und/oder wobei die Funktion des Regenerationsgrenzwertes (RGW) in Abhängigkeit von der Restkapazität (2B, 2B', 2B", 2B"', 2C, 2C', 2C", 2C"') der Wasserbehandlungselemente der weiteren Behälter (1B, 1C) monoton, vorzugsweise streng monoton, fällt.

2.    Verfahren nach einem Anspruch 1, **dadurch gekennzeichnet, dass** mehr als ein weiterer Behälter (1B, 1C) vorgesehen ist und bei der Festlegung des Regenerationsgrenzwertes (RGW) die aktuellen Teilvolumenströme (5A, 5A', 5A", 5A"', 5B, 5B', 5B", 5B"', 5C, 5C', 5C", 5C"') und/oder die Restkapazitäten (2B, 2B', 2B", 2B"', 2C, 2C', 2C", 2C"') aller weiteren Behälter berücksichtigt werden.

3.    Verfahren nach einem der vorherigen Ansprüche, **dadurch gekennzeichnet, dass** während des Regeneriervorgangs eine Regeneriermittellösung eingesetzt wird und die Menge der eingesetzten Regeneriermittellösung in Abhängigkeit vom Regenerationsgrenzwert (RGW) gewählt wird, derart, dass umso mehr Regeneriermittellösung eingesetzt wird, je kleiner der Regenerationsgrenzwert (RGW) ist.

4. Verfahren nach einem der vorhergehenden Ansprüche, **dadurch gekennzeichnet, dass** die Wasserbehandlungsanlage eine Wasserenthärtungsanlage zum Enthärten von Wasser mit einer Rohwasserhärte ist und die Behälter ein Ionentauscherharz als Wasserbehandlungselement enthalten.

5. Verfahren nach Anspruch 4, **dadurch gekennzeichnet, dass** die Restkapazitäten (2A, 2B, 2B', 2B'', 2B''', 2C, 2C', 2C'', 2C''') des Ionentauscherharzes der Behälter (1A, 1B, 1C) aus der seit der letzten Regeneration durch den entsprechenden Behälter (1A, 1B, 1C) geflossenen Wassermenge und aus der Rohwasserhärte bestimmt werden.

6. Verfahren nach einem der vorhergehenden Ansprüche, **dadurch gekennzeichnet, dass** der Regenerationsgrenzwert (RGW) in Abhängigkeit von den aktuellen Teilvolumenströmen (5A, 5A', 5A'', 5A''', 5B, 5B', 5B'', 5B''', 5C, 5C', 5C'', 5C''') durch den ersten und den weiteren Behälter (1A, 1B, 1C), und von der weiteren Restkapazität (2B, 2B', 2B'', 2B''', 2C, 2C', 2C'', 2C''') des Wasserbehandlungselements des weiteren Behälters (1B, 1C) bestimmt wird.

## Claims

1. Method for operating a water treatment system comprising a first container (1A) and at least one further container (1B, 1C), wherein the containers (1A, 1B, 1C) are passed through in parallel by one partial volume flow (5A, 5A', 5A'', 5A''', 5B, 5B', 5B'', 5B''', 5C, 5C', 5C'', 5C''') in each case and all containers as a whole are passed through by an overall volume flow (GVS), the containers each being provided with a regenerative water treatment element of a basic capacity,
the method comprising the following repetitive steps:

   - determining a residual capacity (2A) of the water treatment element in the first container (1A) and determining the instantaneous partial volume flow (5A, 5A', 5A'', 5A''') through the first container,
   - determining a further residual capacity (2B, 2B', 2B'', 2B''', 2C, 2C', 2C'', 2C''') of the water treatment element in at least one of the further containers (1B, 1C) and/or determining the instantaneous partial volume flow (5B, 5B', 5B'', 5B''', 5C, 5C', 5C'', 5C''') through at least one of the further containers (1B, 1C),
   - determining a regeneration limit value (RGW) for the first container;

   wherein a regenerative process of the water treatment element in the first container (1A) is initiated when the residual capacity (2A) of the water treatment element in the first container (1A) falls below the regeneration limit value (RGW), wherein the regeneration limit value (RGW) is calculated in dependence on the instantaneous partial volume flows (5A, 5A', 5A'', 5A''', 5B, 5B', 5B'', 5B''', 5C, 5C', 5C'', 5C''') through the first and the further container (1A, 1B, 1C) and/or on the further residual capacity (2B, 2B', 2B'', 2B''', 2C, 2C', 2C'', 2c''') of the water treatment element of the further container (1B, 1C), and wherein the function of the regeneration limit value (RGW) decreases monotonically, preferably strictly monotonically in dependence on the instantaneous partial volume flows (5A, 5A', 5A'', 5A''', 5B, 5B', 5B'', 5B''', 5C, 5C', 5C'', 5C''') and/or wherein the function of the regeneration limit value (RGW) decreases monotonically, preferably strictly monotonically in dependence on the residual capacity (2B, 2B', 2B'', 2B''', 2C, 2C', 2C'', 2C''') of the water treatment elements of the further containers (1B, 1C).

2. Method according to claim 1, **characterized in that** more than one further container (1B, 1C) is provided and the determination of the regeneration limit value (RGW) takes into account the instantaneous partial volume flows (5A, 5A', 5A'', 5A''', 5B, 5B', 5B'', 5B''', 5C, 5C', 5C'', 5C''') and/or the residual capacities (2B, 2B', 2B'', 2B''', 2C, 2C', 2C'', 2C''') of all further containers.

3. Method according to any one of the preceding claims, **characterized in that** during the regenerative process a regenerant solution is used and the amount of the regenerant solution used is selected in dependence on the regeneration limit value (RGW) such that the larger the amount of regenerant solution that is used, the smaller the regeneration limit value (RGW).

4. Method according to any one of the preceding claims, **characterized in that** the water treatment system is a water softening system for softening water with a raw water hardness and the containers contain an ion exchanger resin as water treatment element.

5. Method according to claim 4, **characterized in that** the residual capacities (2A, 2B, 2B', 2B'', 2B''', 2C, 2C', 2C'',

2C''') of the ion exchanger resin of the containers (1A, 1B, 1C) are determined from the amount of water that has flown through the corresponding container (1A, 1B, 1C) since the last regeneration and from the raw water hardness.

6. Method according to any one of the preceding claims, **characterized in that** the regeneration limit value (RGW) is determined in dependence on the instantaneous partial volume flows (5A, 5A', 5A", 5A''', 5B, 5B', 5B", 5B''', 5C, 5C', 5C", 5C''') through the first and the further containers (1A, 1B, 1C) and on the further residual capacity (2B, 2B', 2B", 2B''', 2C, 2C', 2C", 2C''') of the water treatment element of the further container (1B, 1C).

## Revendications

1. Procédé permettant de faire fonctionner une installation de traitement de l'eau comprenant un premier réservoir (1A) et au moins un autre réservoir (1B, 1C), les réservoirs (1A, 1B, 1C) étant chacun traversés parallèlement par un flux volumique partiel (5A, 5A', 5A", 5A''', 5B, 5B', 5B", 5B''', 5C, 5C', 5C", 5C''') et ensemble par un flux volumique total (GVS) et étant chacun équipés d'un élément de traitement de l'eau régénérable d'une capacité de base, lequel procédé comprend les étapes suivantes se répétant :

   • détermination d'une capacité résiduelle (2A) de l'élément de traitement de l'eau dans le premier réservoir (1A) et détermination du flux volumique partiel (5A, 5A', 5A", 5A''') actuel à travers le premier réservoir,
   • détermination d'une autre capacité résiduelle (2B, 2B', 2B", 2B''', 2C, 2C', 2C", 2C''') de l'élément de traitement de l'eau dans au moins un des autres réservoirs (1B, 1C) et/ou détermination du flux volumique partiel (5B, 5B', 5B", 5B''', 5C, 5C', 5C", 5C''') actuel à travers au moins un des autres réservoirs (1B, 1 C),
   • détermination d'une valeur limite de régénération (RGW) pour le premier réservoir,

   un processus de régénération de l'élément de traitement de l'eau étant déclenché dans le premier réservoir (1A) si la capacité résiduelle (2A) de l'élément de traitement de l'eau dans le premier réservoir (1A) devient inférieure à la valeur limite de régénération (RGW), la valeur limite de régénération (RGW) étant calculée en fonction des flux volumiques partiels (5A, 5A', 5A", 5A''', 5B, 5B', 5B", 5B''', 5C, 5C', 5C", 5C''') actuels à travers le premier et les autres réservoirs (1A, 1B, 1C) et/ou de l'autre capacité résiduelle (2B, 2B', 2B", 2B''', 2C, 2C', 2C", 2C''') de l'élément de traitement de l'eau de l'autre réservoir (1B, 1C), et la fonction de la valeur limite de régénération (RGW) en fonction des flux volumiques partiels (5A, 5A', 5A", 5A''', 5B, 5B', 5B", 5B''', 5C, 5', 5C", 5C''') actuels étant monotone, de préférence strictement monotone, et/ou la fonction de la valeur limite de régénération (RGW) en fonction de la capacité résiduelle (2B, 2B', 2B", 2B''', 2C, 2C', 2C", 2C''') des éléments de traitement de l'eau des autres réservoirs (1B, 1C) étant monotone, de préférence strictement monotone.

2. Procédé selon la revendication 1, **caractérisé en ce que** plus d'un autre réservoir (1B, 1C) sont prévus et que lors de la détermination de la valeur limite de régénération (RGW), les flux volumiques partiels (5A, 5A', 5A", 5A''', 5B, 5B', 5B", 5B''', 5C, 5C', 5C", 5C''') actuels et/ou les capacités résiduelles (2B, 2B', 2B", 2B''', 2C, 2C', 2C", 2C''') de tous les autres réservoirs sont pris en compte.

3. Procédé selon l'une des revendications précédentes, **caractérisé en ce que** pendant le processus de régénération, une solution d'agent régénérant est utilisée et la quantité de la solution d'agent régénérant utilisée est choisie en fonction de la valeur limite de régénération (RGW) de telle sorte que plus la quantité de solution d'agent régénérant utilisée est grande, plus la valeur limite de régénération (RGW) est petite.

4. Procédé selon l'une des revendications précédentes, **caractérisé en ce que** l'installation de traitement de l'eau est une installation d'adoucissement de l'eau pour adoucir l'eau ayant une dureté d'eau brute et les réservoirs contiennent une résine échangeuse d'ions comme élément de traitement de l'eau.

5. Procédé selon la revendication 4, **caractérisé en ce que** les capacités résiduelles (2A, 2B, 2B', 2B", 2B''', 2C, 2C', 2C", 2C''') de la résine échangeuse d'ions des réservoirs (1A, 1B, 1C) sont déterminées à partir de la quantité d'eau qui a traversé le réservoir correspondant (1A, 1B, 1C) depuis la dernière régénération et de la dureté d'eau brute.

6. Procédé selon l'une des revendications précédentes, **caractérisé en ce que** la valeur limite de régénération (RGW) est déterminée en fonction des flux volumiques partiels (5A, 5A', 5A", 5A''', 5B, 5B', 5B", 5B''', 5C, 5C', 5C", 5C''')

actuels à travers le premier et les autres réservoirs (1A, 1B, 1C) et de l'autre capacité résiduelle (2B, 2B', 2B'', 2B''', 2C, 2C', 2C'', 2C''') de l'élément de traitement de l'eau de l'autre réservoir (1B, 1C).

Fig. 1a

Fig. 1b

Fig. 1c

Fig. 1d

- Bestimmung der Restkapazität 2A des ersten Behälters 1A➜ $RK_1$
- Bestimmung der Restkapazitäten 2B, 2B', 2B'', 2B''', 2C, 2C', 2C'', 2C'''der weiteren Behälter 1B, 1C ➜$RK_w$
- Messung der Teilvolumenströme durch den ersten Behälter ➜$TVS_1$
- Messung der Teilvolumenströme 5B, 5B', 5B'', 5B''', 5C, 5C', 5C'', 5C''' durch die weiteren Behälter 1B, 1C ➜$TVS_w$

Bestimmung des Regenerationsgrenzwertes in Abhängigkeit von $RK_1$, $RK_w$, $TVS_1$ und $TVS_w$ ➜ RGW

$RK_1$ < RGW?

nein

ja

Regeneration des ersten Behälters

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1160204 B1
- DE 3233238 C2
- DE 10350884 B4
- EP 2048117 A1
- US 5069779 A
- WO 9413379 A1
- US 6036866 A
- EP 0447350 A2